# EUROPÄISCHE PATENTSCHRIFT

(11) **EP 1 616 787 B1**
(45) Veröffentlichungstag und Bekanntmachung des Hinweises auf die Patenterteilung: **07.02.2007**
(21) Anmeldenummer: 05015539.9
(22) Anmeldetag: 18.07.2005
(51) Int. Cl.: B64D 39/00, B64C 23/06

(54) **Betankungs-Pod eines Flugzeuges mit geschlepptem Betankungsschlauch**
Refueling pod for aircraft with dragged hose
Nacelle de ravitaillement avec tuyau trainé

(30) Priorität: 16.07.2004 DE 102004034367; 16.07.2004 US 588612 P
(43) Veröffentlichungstag der Anmeldung: 18.01.2006
(73) Patentinhaber: Airbus Deutschland GmbH, 21129 Hamburg (DE)
(72) Erfinder: Lejeau, Damien, 27721 Ritterhude (DE); Schwetzler, Detlev, 27755 Delmenhorst (DE); Aumann, Petra, 21683 Stade-Bützfleth (DE)
(74) Vertreter: Kopf, Korbinian Paul

(56) Entgegenhaltungen:
- DE-A1- 19 964 114
- US-A- 3 360 221
- US-A1- 2004 046 086
- DATABASE WPI Section PQ, Week 200232 Derwent Publications Ltd., London, GB; Class Q25, AN 2002-276258 XP002348813 & JP 2002 053099 A (FUJI HEAVY IND LTD) 19. Februar 2002 (2002-02-19)

## Beschreibung

Die vorliegende Erfindung betrifft die Aeronautik beispielsweise eines Flugzeuges. Insbesondere betrifft die vorliegende Erfindung eine Ablenkvorrichtung zur Beeinflussung einer Nachlaufströmung eines mit einer Strömungsrichtung angeströmten Betankungs-Pods.

In der Luftfahrt kommt es häufig vor, dass irgendwie geartete Körper in der Luft hinter Flugzeugen nachgezogen werden müssen. Dies kann mehrere Gründe haben. Beispielsweise müssen bei Messungen der Atmosphäre zur Gewinnung von Wetterdaten Sonden durch die Luft gezogen werden. Oder es werden beim Betanken von Flugzeugen in der Luft Betankungs-Pods mit Schläuchen verwendet, um beispielsweise Treibstoff oder Wasser von einem Versorgungsflugzeug auf ein anderes zu versorgendes Flugzeug zu befördern. Flugzeuge bewegen sich zumeist mit sehr hohen Geschwindigkeiten durch die Luft. Deshalb entsteht hinter dem Flugzeug sowie einem von einem Flugzeug gezogenen Körper ein turbulenter Nachlauf. Die Eigenschaften von diesem Nachlauf sind von der Bauform der durch die Luft bewegten Körper abhängig. Positiv wirken sich dabei sog. stromlinienförmige Bauweisen aus. Durch die Gestaltung der äußeren Form wird dabei bewirkt, dass die hinter dem Körper entstehenden Luftverwirbelungen möglichst gering ausfallen.

Jedoch ist es nicht immer möglich, diese günstige Form zu verwenden. Beispielsweise im Falle eines Betankungs-Pods muss es möglich sein, am hinteren Ende des Betankungs-Pods einen Schlauch herauszuführen. Dazu muss an diesem Ende eine Öffnung vorgesehen sein, die den Austritt des Schlauches und seines Stabilisierungskorbes gewährleistet. Deshalb hat die Öffnung eine größere Ausdehnung und dadurch entsteht eine stumpfe Bauform im hinteren Bereich des Betankungs-Pods. Strömungstechnisch besitzt diese Form Nachteile, da sich hinter einem solchen stumpfen Strömungskörper Wirbel und Turbulenzen ausbilden, die auf ein sich im Nachlauf befindliches Objekt Auswirkungen haben können und dessen Stabilität verschlechtern können.

Will man in dem Verwirbelungsgebiet hinter einem stumpfen Strömungskörper eine Schleppsonde oder einen Betankungsschlauch betreiben, so wird durch die Turbulenzen evtl. eine aerodynamische Anregung am geschleppten Objekt erzeugt, welche das Objekt ungewollt in Bewegung versetzt.

Es ist eine Aufgabe der vorliegenden Erfindung, Nachlaufströmungen, die hinter einem Betankungs-Pod entstehen können, zu beeinflussen.

Gemäß einem Ausführungsbeispiel der vorliegenden Erfindung, wie in Anspruch 1 angegeben, wird eine Ablenkvorrichtung zur Beeinflussung einer Nachlaufströmung eines mit einer Strömungsrichtung angeströmten Betankungs-Pods angegeben. Die Ablenkvorrichtung umfasst eine Kante, wobei die Kante eine Fläche aufweist, die zur lokalen Strömungsrichtung angewinkelt ist. Die Ablenkvorrichtung ist im Wesentlichen am Ende des Betankungs-Pods anbringbar.

In vorteilhafter Art und Weise beeinflusst die Ablenkvorrichtung die Nachlaufströmung hinter dem Betankungs-Pod. Wenn es sich bei dem angeströmten Betankungs-Pod um einen Strömungskörper mit einem stumpfen Ende handelt, können durch die Nachlaufströmung hinter dem Strömungskörper starke Turbulenzen entstehen. Das Anbringen einer Ablenkvorrichtung an einem Ende des Betankungs-Pods kann bewirken, dass die Nachlaufströmung und damit die von ihr hervorgerufenen Turbulenzen weitestgehend aus dem Bereich unmittelbar hinter dem Betankungs-Pod herausgelenkt werden. Es kann immer noch einen Bereich geben, in dem Turbulenzen auftreten. Durch die Abwinklung der Fläche der Ablenkvorrichtung zur lokalen Strömungsrichtung kann der Bereich jedoch verschoben werden, so dass sich die Turbulenzen nicht mehr unmittelbar hinter dem Betankungs-Pod aufbauen können, sondern im Wesentlichen außerhalb des Querschnitts des Betankungs-Pods entstehen. Ein nachgezogenes Objekt, das sich in dem Bereich unmittelbar hinter dem Betankungs-Pod befinden würde, würde somit weitestgehend von der Wirkung der Turbulenzen befreit. Den Turbulenzen kann deshalb eine nur geringe Angriffsfläche des nachgezogenen Objekts geboten werden, weshalb die Stabilität des nachgezogenen Objektes, die mit der Länge des Einwirkbereiches der Turbulenzen zusammenhängt, erhöht werden kann. Wenn es sich bei dem nachgezogenen Objekt beispielsweise um einen Tankschlauch handelt, kann die erhöhte Stabilität bedeuten, dass der Tankvorgang eines Flugzeuges in der Luft erleichtert und beschleunigt wird, wenn nicht sogar ermöglicht wird. Auch kann ein Einfangen des Tankschlauches durch das zu betankende Flugzeug dadurch vereinfacht und ermöglicht werden.

Gemäß einem weiteren Ausführungsbeispiel der vorliegenden Erfindung, wie in Anspruch 2 angegeben, handelt es sich bei dem siehe Seite 3 um einen stumpfen Strömungskörper.

In vorteilhafter Art und Weise kann die stumpfe Bauform des Strömungskörpers verwendet werden, um beispielsweise eine Austrittsöffnung für einen Schlauch oder eine Sonde auszubilden. Der Flugkörper kann eine Art Aufrollvorrichtung für einen Schlauch ausbilden, die den Schlauch in der Luft fixiert und schützt. Außerdem können in dieser Vorrichtung weitere Funktionselemente ausgebildet sein, beispielsweise Pumpen oder Ventile, die für einen Tankvorgang benötigt werden.

Gemäß der vorliegenden Erfindung, lässt sich an dem Betankungs-Pod ein Betankungsschlauch anbringen. Beim Fliegen entsteht in Strömungsrichtung hinter dem Betankungs-Pod ein Turbulenzbereich. Vergleicht man eine erste Länge eines ersten Abschnittes des Betankungsschlauchs, der sich beim Fliegen mit angeordneter Ablenkvorrichtung in dem Turbulenzbereich befindet, mit einer zweiten Länge eines zweiten Abschnittes des Betankungsschlauchs, der beim Fliegen ohne Ablenkvorrichtung in dem Turbulenzbereich liegt, kann man feststellen, dass die zweite Länge länger als die erste Länge ist.

Wegen der kürzeren Länge des ersten Abschnittes des Betankungsschlauchs, der sich beim Fliegen mit angeordneter Ablenkvorrichtung in dem Turbulenzbereich befindet, bietet der Betankungsschlauch weniger Angriffsfläche für Turbulenzen, als in dem Fall des Fliegens ohne Ablenkvorrichtung. In vorteilhafter Art und Weise ist dadurch das geschleppte Objekt weniger Kräften ausgesetzt. Das kann zu einer höheren Stabilität des nachgezogenen Objektes, beispielsweise des Betankungsschlauchs, führen. In anderen Worten: Die Turbulenzen können den Betankungsschlauch in eine unregelmäßige und chaotische Bewegung versetzen, die nicht gewünscht ist. Die Bewegung kann umso stärker ausfallen je größer die Länge des Abschnittes des Betankungsschlauchs ist, der sich in dem Turbulenzbereich befindet. Es kann vorteilhaft sein, durch Anbringung der Ablenkvorrichtung an dem Betankungs-Pod, den Einflussbereich der Turbulenzen auf den Betankungsschlauch zu verringern. Dadurch kann den Betankungsschlauch im Wesentlichen stabilisiert werden.

In vorteilhafter Art und Weise kann die Ablenkvorrichtung zur Stabilisierung von Betankungsschläuchen auf Tankflugzeugen, wie dem A310-MRTT (Multi-Role Tanker Transport), eingesetzt werden. Dadurch kann der Betankungsvorgang von Flugzeugen in der Luft erleichtert und beschleunigt werden, da unnötige Manöver zum Treffen des Betankungsschlauches vermieden werden können und somit die Kosten im produktiven Betrieb reduziert werden können.

Gemäß einem weiteren Ausführungsbeispiel der vorliegenden Erfindung, wie in Anspruch 3 angegeben, ist die Ablenkvorrichtung für Strömungsgeschwindigkeiten von etwa 50 km/h bis etwa 1300 km/h, insbesondere für Strömungsgeschwindigkeiten von etwa 200 km/h bis 1300 km/h und weiter insbesondere für Strömungsgeschwindigkeiten von etwa 600 km/h bis 1300 km/h ausgestaltet.

Die Wirkungsweise der Ablenkvorrichtung ist von der jeweiligen Strömungsgeschwindigkeit abhängig. In vorteilhafter Art und Weise kann die Ablenkvorrichtung für typische Strömungsgeschwindigkeiten, wie sie bei fliegenden Flugzeugen auftreten, ausgestaltet sein. Dadurch ist es möglich, die Ablenkvorrichtung ohne langwieriges Optimieren bei stumpfen Strömungskörpern für Flugzeuge, wie beispielsweise einem Betankungs-Pod, einzusetzen. Es ist somit auch möglich, die Ablenkvorrichtung als einfachen Nachrüstsatz auszubilden. In vorteilhafter Art und Weise kann Geld und Zeit für die Optimierung der Ablenkvorrichtung bei den angegebenen Strömungsgeschwindigkeiten gespart werden. Da jede Art von Modifikationen am Flugzeug einer speziellen Zertifizierung bedürfen, die in der Regel durch Flugtests nachgewiesen wird, ergibt sich mit dieser einfachen Lösung der Ablenkvorrichtung ein großes Sparpotential während der Flugerprobungsphase.

Gemäß einem weiteren Ausführungsbeispiel der vorliegenden Erfindung, wie in Anspruch 4 angegeben, ist die Fläche der Ablenkvorrichtung im Wesentlichen senkrecht zur lokalen Strömungsrichtung anwinkelbar.

Durch die im Wesentlichen senkrechte Anwinklung zur lokalen Strömungsrichtung wird erreicht, dass die maximale Wirkung erzielt wird. Die Wirkung von Flächen auf Strömungen ist abhängig von der Größe des zur lokalen Strömungsrichtung senkrechten Flächenquerschnitts. Bei im Wesentlichen senkrecht zur lokalen Strömungsrichtung angewinkelten Flächen kann gewährleistet werden, dass die maximale Fläche der Ablenkvorrichtung als Wirkfläche zur Verfügung steht. Eine effiziente Wirkung kann somit erzielt werden.

Gemäß einem weiteren Ausführungsbeispiel der vorliegenden Erfindung, wie in Anspruch 5 angegeben, wird die Verwendung eines Betankungs-Pods zur Verringerung von Hose-Out Instabilitäten eines hinter dem Betankungs-Pod geschleppten Betankungsschlauches eines Tankflugzeuges angegeben. Hose-Out Instabilität bedeutet dabei, dass der geschleppte Betankungsschlauch durch Turbulenzen zu Schwingungen angeregt wird, die sich zu starken Bewegungen des Betankungsschlauches aufschaukeln können. Der Betankungs-Pod wird mit einer Strömungsrichtung angeströmt. Durch das Ablenken einer Strömung winklig zu der Strömungsrichtung wird die Länge eines Bereiches des Betankungsschlauches, der beim Flug in einem Turbulenzbereich hinter dem Betankungs-Pod liegt, beeinflusst. Die Ablenkung geschieht im Wesentlichen in Strömungsrichtung am Ende des Betankungs-Pods.

In vorteilhafter Art und Weise wird durch die Ablenkung der Strömung die Länge eines Abschnittes des Betankungsschlauches, auf die die Turbulenzen wirken, beeinflusst. Je geringer die Länge des Abschnittes ist, umso stabiler bewegt sich der Schlauch. Ein Betankungsvorgang kann durch die stabile Lage des Schlauches vereinfacht und evtl. beschleunigt werden.

Gemäß einem weiteren Ausführungsbeispiel der vorliegenden Erfindung, wie in Anspruch 6 angegeben, erfolgt die Ablenkung der Strömung im Wesentlichen rechtwinklig zu der lokalen Strömungsrichtung.

Durch die im Wesentlichen rechtwinklig zu der Strömungsrichtung ausgeführten Ablenkung der Strömung kann der Strömung eine möglichst große Angriffsfläche entgegengestellt werden. In vorteilhafter Art und Weise kann dadurch eine effektive Beeinflussung der Nachlaufströmung erreicht werden.

Im Folgenden werden Ausführungsbeispiele der vorliegenden Erfindung mit Verweis auf die folgenden Figuren detailliert beschrieben.

Fig. 1 zeigt eine zweidimensionale Seitenansicht eines Betankungs-Pods mit im hinteren Bereich angebrachter Ablenkvorrichtung gemäß einem vorteilhaften Ausführungsbeispiel der vorliegenden Erfindung.

Fig. 2 zeigt eine prinzipielle zweidimensionale Rückansicht eines Betankungs-Pods mit im hinteren Bereich angebrachter Ablenkvorrichtung gemäß einem vorteilhaften Ausführungsbeispiel der vorliegenden Erfindung.

Fig. 3 zeigt eine dreidimensionale Rückansicht eines vorteilhaften Ausführungsbeispiels der vorliegenden Erfindung.

Fig. 4 zeigt eine schematisierte zweidimensionale Seitenansicht der Wirkung einer Nachlaufströmung auf eine geschleppte Sonde ohne Ablenkvorrichtung.

Fig. 5 zeigt eine schematisierte zweidimensionale Seitenansicht der Wirkung einer Nachlaufströmung auf eine geschleppte Sonde mit Ablenkvorrichtung.

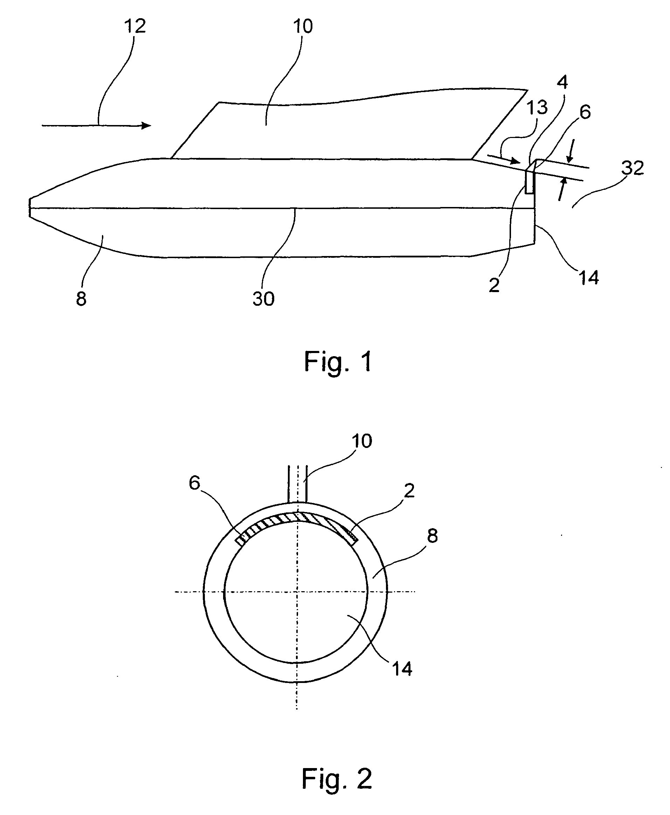

Fig. 1 zeigt eine prinzipielle zweidimensionale Seitenansicht eines Betankungs-Pods mit im hinteren Bereich angebrachter Ablenkvorrichtung gemäß einem vorteilhaften Ausführungsbeispiel der vorliegenden Erfindung. Bei dem Betankungs-Pod 8 handelt es sich um einen Strömungskörper, dessen vorderes Viertel als Spitze ausgebildet ist. Bei Bewegung wird der Strömungskörper von einer Strömung in der Strömungsrichtung 12 angeströmt. Das vordere Ende des Betankungs-Pods 8 erleichtert aufgrund der spitzen Bauform, die der Stromlinienform entspricht, eine Bewegung gegen die Strömungsrichtung 12. Luft, durch die sich beispielsweise der Strömungskörper 8 bewegt, wird im vorderen Viertel des Strömungskörpers von diesem verdrängt und strömt dicht an dem Strömungskörper bis zum hinteren Ende vorbei. Bei dem Strömungskörper handelt es sich um einen rotationssymmetrischen Körper mit der Rotationsachse 30. Im mittleren Bereich, im Anschluss an das vordere Viertel, weist der Betankungs-Pod 8 einen konstanten Durchmesser auf. Im hinteren Viertel verjüngt sich der bis dahin konstante Durchmesser, bis er am Ende einen stumpfen Bereich 14, der beispielsweise eine Öffnung sein kann, ausbildet.

Diese Öffnung 14 kann beispielsweise dazu verwendet werden, eine Schleppsonde 20 oder einen Betankungsschlauch herauszuführen. Der Betankungs-Pod 8 dient dem Schutz des austretenden und nachgezogenen Objektes 20. Der Betankungs-Pod 8 umschließt eine beispielsweise vorhandene Befestigung oder Aufwicklung des Schlauches und leitet die Strömung 12 um diese, meist nicht stromlinienförmig ausgebildeten, Elemente herum.

Um einen in Strömungsrichtung 12 gesehen hinter dem Betankungs-Pod 8 liegenden Bereich 32 möglichst gut vor Turbulenzen der Nachlaufströmung zu schützen, ist an dem Betankungs-Pod 8 eine Ablenkvorrichtung 2 angebracht. Die Ablenkvorrichtung 2 umfasst eine Kante, die eine der Strömung 12 nahezu senkrecht entgegenstehende Fläche 4 und eine dieser Richtung abgewandte Fläche 6 aufweist. Die Ablenkvorrichtung 2 ist am hinteren Ende des Betankungs-Pods 8 radial um die Öffnung 14 in der oberhalb der Rotationsachse 30 gelegenen Hälfte des Betankungs-Pods 8 ausgebildet.. Die optimale Lage und Winkel zur lokalen Strömung 13 der Ablenkvorrichtung 2 im hinteren Viertel des Betankungs-Pods 8 lässt sich experimentell (oder rechnerisch) ermitteln und ebenso die optimale Höhe der Ablenkvorrichtung 2, die über den Betankungs-Pod 8 hinaussteht und durch die Länge der Fläche 6 vorgegeben ist. Beispielsweise kann die Länge der Fläche 6 etwa 25 mm betragen. Die Verbindung des Betankungs-Pods 8 mit einem Flugzeug besorgt ein Verbindungselement 10, das beispielsweise an einer Tragfläche oder dem Rumpf eines Flugzeugs befestigt ist und das möglichst aerodynamisch ausgebildet ist um einen möglichst geringen Luftwiderstand zu bieten.

Fig. 2 zeigt eine prinzipielle zweidimensionale Rückansicht eines Betankungs-Pods 8 mit einer im hinteren Bereich angebrachten Ablenkvorrichtung 2 gemäß einem vorteilhaften Ausführungsbeispiel der vorliegenden Erfindung. Dem Bild zu entnehmen ist, dass es sich bei dem Betankungs-Pod 8 um einen rotationssymmetrischen Körper handelt. Ebenso ist die Öffnung 14 rotationssymmetrisch ausgebildet. In radialer Richtung um die Öffnung 14 ist die Ablenkvorrichtung 2 angeordnet. Die Länge der Ablenkvorrichtung ist geringer als die Länge des Umfangs der Öffnung 14. Die Ablenkvorrichtung 2 ist in der oberen Hälfte des Betankungs-Pods 8 ausgebildet und die Höhe der Ablenkvorrichtung 2, die von der Länge der Fläche 6 ausgebildet wird, kann beispielsweise 25 mm betragen.

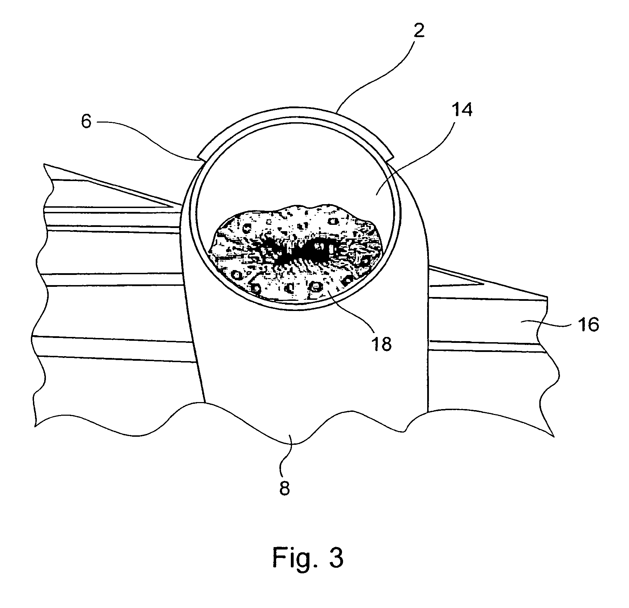

In Fig. 3 ist eine dreidimensionale Rückansicht eines vorteilhaften Ausführungsbeispiels der vorliegenden Erfindung dargestellt. Das Bild zeigt die Anbringung des Betankungs-Pods 8 an einem Flugzeugflügel 16. Die Ablenkvorrichtung 2 ist in der oberen Hälfte des Betankungs-Pods 8 ausgebildet und an der Öffnung 14 befestigt. Die Befestigung an der Öffnung 14 erlaubt es, dass die Ablenkvorrichtung 2 auch als Nachrüstsatz an bereits existierenden Betankungs-Pods 8 nachgerüstet werden kann. Die Öffnung 14 bildet einen stumpfen Abschluss des Betankungs-Pods 8. Ein solches stumpfes Ende ist für die aerodynamischen Eigenschaften eines Körpers ungünstig, da sich hinter einem stumpfen Abschluss eines Körpers leicht Verwirbelungen bilden können. Die Öffnung 14 muss allerdings ein gewisses Ausmaß aufweisen, um den Austritt eines Tankschlauches und seines Stabilisierungskorbes 18 zu ermöglichen.

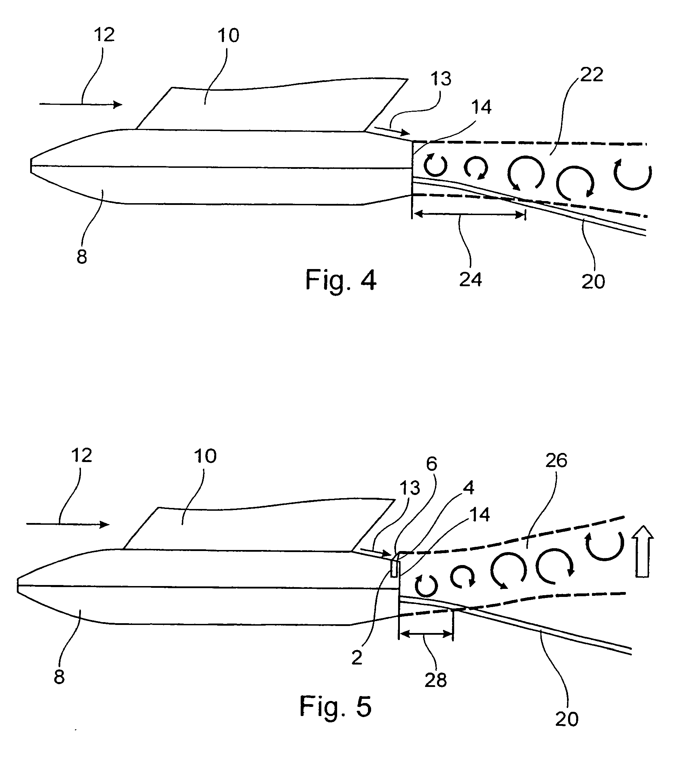

Fig. 4 zeigt eine schematisierte zweidimensionale Seitenansicht der Wirkung einer Nachlaufströmung auf eine geschleppte Sonde 20 ohne Ablenkvorrichtung. Das Bild zeigt einen Betankungs-Pod 8 mit einer ausgefahrenen Sonde 20. Die Sonde 20 verlässt den Betankungs-Pod 8 durch die Öffnung 14 am hinteren Ende des Betankungs-Pods 8. Aufgrund der Schwerkraft der Sonde 20 wird sie in die Richtung der Unterseite des Betankungs-Pods 8 geformt. Die aufgrund der Bewegung des Betankungs-Pods 8 entstehende Strömung 12 wirkt einerseits der Kraft, die die Sonde in Richtung Unterseite des Betankungs-Pods 8 auslenkt, entgegen. Deshalb weist die Sonde 20 eine nur leicht gekrümmte Form auf. Die Strömung 12 bewirkt aber andererseits auch im Zusammenspiel mit der Öffnung 14 und dem sich dadurch ergebenden stumpfen Ende des Betankungs-Pods 8, dass sich im hinteren Bereich 22 des Betankungs-Pods 8, bedingt durch die Nachlaufströmung der Strömung 12, Wirbel ausbilden. Diese Wirbel wirken auf den Abschnitt der Länge 24 der Sonde 20, der sich im Bereich 22 der Verwirbelung befindet.

Der Bereich 22 schließt sich hinter den Betankungs-Pod 8 an und weist mit zunehmendem Abstand von der Öffnung 14 einen nahezu waagrechten Verlauf auf. Mit zunehmendem Abstand von der Öffnung 14 lässt sich eine leichte Weitung des Durchmessers des Bereiches 22 feststellen. Die Länge 24 der Sonde 20, die sich in dem Bereich der Verwirbelungen 22 befindet, hat Einfluss auf die Stabilität der Sonde 20. Je kürzer diese Einwirklänge 24 ist, umso stabiler bewegt sich die Sonde 20 in der Luft. Deshalb zeigt Fig. 4 eine für die Stabilität der Sonde 20 ungünstige Bauform.

Fig. 5 zeigt eine schematische zweidimensionale Seitenansicht der Wirkung einer Nachlaufströmung auf eine geschleppte Sonde 20 mit Ablenkvorrichtung 2. Das Bild zeigt die Auswirkung einer an einem Tank-Pod 8 angebrachten Ablenkvorrichtung 2 auf den Bereich der Nachlaufströmung 26 und der damit verbundenen Turbulenzen hinter einem stumpfen Ende 14 des Betankungs-Pods 8. Die Sonde 20 weist aufgrund der auf sie wirkenden Kräfte eine auf die Unterseite des Tank-Pods 8 gerichtete Krümmung auf. Der Bereich der Verwirbelung 26 weist aufgrund der Ablenkvorrichtung 2 einen mit zunehmendem Abstand von dem Betankungs-Pod 8 über die Oberseite des Betankungs-Pods 8 hinausgehenden Verlauf auf. Die Bereichsgrenzen verlaufen dabei nahezu parallel, wobei sich der Durchmesser des Bereiches 26 mit zunehmendem Abstand von dem Betankungs-Pod 8 leicht weitet. Wegen der in die Richtung der Unterseite des Betankungs-Pods 8 verlaufenden Krümmung der Sonde 20 und wegen des in die Richtung der Oberseite und in die Richtung der Ablenkvorrichtung 2 des Betankungs-Pods 8 verlaufenden Bereich der Verwirbelung 26, kommt es nur über eine kleine Länge 28 eines Abschnitts der Sonde 20 zu einer Einwirkung der Turbulenzen auf die Sonde 20. Verglichen mit der in Fig. 4 dargestellten Situation, ist die Einwirkung der Nachlaufströmung auf die Sonde 20 geringer, wodurch die Stabilität der Sonde 20 in vorteilhafter Art und Weise erhöht wird. Die Sonde 20 verhält sich, verglichen mit der in Fig. 4 dargestellten Situation, stabiler. Dadurch wird ein Betankungsvorgang vereinfacht und kann schneller vonstatten gehen. Eine Aufschaukelbewegung der Sonde 20 wird vermieden dadurch reduziert.

Ergänzend ist darauf hinzuweisen, dass "umfassend" keine anderen Elemente oder Schritte ausschließt und "eine" oder "ein" keine Vielzahl ausschließt. Bezugszeichen in den Ansprüchen sind nicht als Einschränkung anzusehen.

## Patentansprüche

1. Betankungs-Pod (8) für ein Flugzeug mit geschlepptem Betankungsschlauch (20), wobei an den Betankungs-Pod (8) ein Betankungsschlauch (20) anbringbar ist;
wobei beim Fliegen, in Strömungsrichtung hinter dem Betankungs-Pod (8), ein Turbulenzbereich entsteht;
**dadurch gekennzeichnet, dass**
an dem Betankungs-Pod (8) eine Ablenkvorrichtung (2) angebracht ist, umfassend
eine Kante;
wobei die Kante eine Fläche (4) aufweist;
wobei die Fläche (4) zur lokalen Strömungsrichtung (13) angewinkelt ist;
wobei die Ablenkvorrichtung (2) im Wesentlichen an einem Ende des Betankungs-Pods (8) angebracht ist;
wobei ein erster Abschnitt des Betankungsschlauchs (20), der sich beim Fliegen mit angeordneter Ablenkvorrichtung (2) in dem Turbulenzbereich befindet, eine erste Länge (28) aufweist; und
wobei eine zweite Länge (24) eines zweiten Abschnitts des Betankungsschlauchs (20), der beim Fliegen ohne Ablenkvorrichtung in dem Turbulenzbereich ist, länger ist als die erste Länge.

2. Betankungs-Pod (8) nach Anspruch 1,
wobei der Betankungs-Pod (8) ein stumpfer Strömungskörper ist.

3. Betankungs-Pod (8) nach Anspruch 1 oder 2,
wobei die Ablenkvorrichtung für Strömungsgeschwindigkeiten von etwa 50 km/h bis etwa 1300 km/h ausgestaltet ist, insbesondere für Strömungsgeschwindigkeiten von etwa 200 km/h bis 1300 km/h ausgestaltet ist, und weiter insbesondere für Strömungsgeschwindigkeiten von etwa 600 km/h bis 1300 km/h ausgestaltet ist.

4. Betankungs-Pod (8) nach einem der Ansprüche 1 bis 3,
wobei die Fläche (4) im Wesentlichen senkrecht zur lokalen Strömungsrichtung (13) anwinkelbar ist.

5. Verwendung eines Betankungs-Pods (8) gemäß einem der Ansprüche 1 bis 4 zur Verringerung von Hose-Out Instabilitäten eines hinter einem Betankungs-Pod (8) geschleppten Betankungsschlauches (20) eines Tankflugzeugs, wobei der Betankungs-Pod (8) mit einer Strömungsrichtung (12) angeströmt wird, wobei durch die Verwendung des Betankungs-Pods (8) eine Länge eines Bereichs des Betankungsschlauches, der beim Flug in einem Turbulenzbereich hinter dem Betankungs-Pod (8) ist, durch Ablenken einer Strömung winklig zu der lokalen Strömungsrichtung (13) beeinflusst wird, wobei das Ablenken in Strömungsrichtung im Wesentlichen an einem Ende des Betankungs-Pods (8) erfolgt.

6. Verwendung nach Anspruch 5,
wobei die Ablenkung der Strömung im Wesentlichen rechtwinklig zu der lokalen Strömungsrichtung (13) erfolgt.

## Claims

1. Fuelling pod (8) for an aircraft with a dragged fuelling hose (20),
wherein a fuelling hose (20) is connectable to the fuelling pod (8);
wherein during flight there is a region of turbulence rearward of the fuelling pod in flow direction;
**characterized in that**
a deflection device (2) is connected to the fuelling pod (8), comprising:
an edge;
wherein the edge has a face (4);
wherein the face (4) is at an angle to the local flow direction (13);
wherein the deflection device (2) is connected substantially to an end of the fuelling pod (8);
wherein a first portion of the fuelling hose (20), which is located in the region of turbulence during flight with arranged deflection device (2), has a first length (28); and
wherein a second length (24) of a second portion of the fuelling hose (20), which is in the region of turbulence during flight without deflection device, is longer than the first length.

2. Fuelling pod (8) according to claim 1,
wherein the fuelling pod (8) is a blunt flow body.

3. Fuelling pod (8) according to claim 1 or 2,
wherein the deflection device is designed for flow velocities of about 50 km/h to about 1300 km/h, in particular for flow velocities of about 200 km/h to 1300 km/h, and further particularly for flow velocities of about 600 km/h to 1300 km/h.

4. Fuelling pod (8) according to one of the claims 1 to 3,
wherein the face (4) is angleable substantially perpendicular to the local flow direction (13).

5. Use of a fuelling pod (8) according to one of the claims 1 to 4 for reducing hose out instabilities of a fuelling hose of a fuelling aircraft, dragged rearward of a fuelling pod (8),
wherein a flow direction (12) is flowing against the fuelling pod (8),
wherein, by the use of the fuelling pod (8), a length of a region of the fuelling hose, which is in a region of turbulence rearward of the fuelling pod (8) during flight, is affected by deflecting a flow at an angle to the local flow direction (13),
wherein the deflection in flow direction is occurring substantially at an end of the fuelling pod (8).

6. Use according to claim 5,
wherein the deflection of the flow is substantially perpendicular to the local flow direction (13).

## Revendications

1. Nacelle de ravitaillement (8) pour un avion à perche de ravitaillement traînée (20), dans laquelle
une perche de ravitaillement (20) est montée sur la nacelle de ravitaillement (8) ;
une zone de turbulences se forme en vol dans la direction d'écoulement derrière la nacelle de ravitaillement (8)
**caractérisée en ce que**
sur la nacelle de ravitaillement (8), il est monté un dispositif déflecteur (2) comportant
une arête ;
l'arête présente une surface (4) ;
la surface (4) est inclinée par rapport à la direction d'écoulement locale (13) ;
le dispositif déflecteur (2) est monté essentiellement à une extrémité de la nacelle de ravitaillement (8) ;
une première section de la perche de ravitaillement (20) qui, en vol et le dispositif déflecteur (2) étant monté, se situe dans la zone de turbulences ; la première section présentant une première longueur ; et
un seconde longueur (24) de la seconde section de la perche de ravitaillement (20) qui, en vol et sans dispositif déflecteur, se situe dans la zone de turbulences ; la seconde longueur étant plus longue que la première longueur.

2. Nacelle de ravitaillement (8) selon la revendication 1, dans laquelle
la nacelle de ravitaillement (8) est un corps d'écoulement tronconique.

3. Nacelle de ravitaillement (8) selon la revendication 1 ou 2, dans laquelle
le dispositif déflecteur est conçu pour des vitesses d'écoulement d'environ 50 km/h à environ 1300 km/h, en particulier pour des vitesses d'écoulement d'environ 200 km/h à environ 1300 km/h, et plus particulièrement pour des vitesses d'écoulement de 600 km/h à 1300 km/h.

4. Nacelle de ravitaillement (8) selon l'une des revendications 1 à 3, dans laquelle
la surface (4) est pliée essentiellement à la perpendiculaire de la direction d'écoulement locale (13).

5. Utilisation d'une nacelle de ravitaillement (8) selon l'un des revendications 1 à 4, pour réduire les instabilités d'arrachement d'une perche de ravitaillement (20) d'un avion de ravitaillement, traînée derrière une nacelle de ravitaillement (8), la nacelle de ravitaillement (8) recevant les courants d'air dans une direction d'écoulement (12), une longueur d'une zone de la perche de ravitaillement, qui se situe en vol dans une zone de turbulences derrière la nacelle de ravitaillement (8), étant influencée par l'utilisation de la nacelle de ravitaillement (8), par la déviation d'un courant selon un angle par rapport à la direction d'écoulement locale (13), la déviation s'effectuant dans la direction d'écoulement, essentiellement à une extrémité de la nacelle de ravitaillement (8).

6. Utilisation selon la revendication 5, dans laquelle
la déviation de l'écoulement s'effectue essentiellement à angle droit par rapport à la direction d'écoulement locale (13).
